# EUROPEAN PATENT APPLICATION

(11) **EP 0 568 210 A1**
(43) Date of publication of application: **03.11.1993**
(21) Application number: 93302812.8
(22) Date of filing: 08.04.1993
(51) Int. Cl.: B60R 1/08

(54) **Rear view mirror**

(30) Priority: 30.04.1992 GB 9209323
(71) Applicant: BRITAX (GECO) S.A., F-77981 St. Fargeau-Ponthierry Cédex (FR)
(72) Inventor: Bonnet, Gilles, F-75015 Paris (FR)
(74) Representative: Hollinghurst, Antony

(57) **Abstract**

A rear view mirror for a motor vehicle, comprises a first reflective surface (34) having a low coefficient of reflectivity, a second reflective surface (18) behind the first reflective surface (34) and having a higher coefficient of reflectivity, an intermediate photochromic layer (20) between the first reflective surface (34) and the second reflective surface (18) and an ultraviolet light source (24) positioned to irradiate such intermediate layer (20). The photochromic layer (20) normally has a high transmissivity of visible light but becomes opaque to visible light when it is irradiated with ultraviolet light.

## Description

This invention relates to a rear view mirror for a motor vehicle of the type comprising a first reflective surface having a low coefficient of reflectivity, a second reflective surface behind the first reflective surface and having a higher coefficient of reflectivity, an intermediate light transmitting layer between the first reflective surface and the second reflective surface and means for varying the transmissivity of the intermediate layer.

GB-A-2225647 discloses a mirror of this type in which the intermediate layer is an liquid crystal layer with a control unit which normally applies an electric field to the layer to maintain it in a substantially transparent state, enabling a user to view the image from the second reflective surface. At night, any excessive level of light from the headlights of a following vehicle is detected by a photocell which causes the control unit to reduce the electric field applied to the liquid crystal layer which becomes opaque, with the result that the user sees only the reduced brightness reflection from the first reflective surface.

GB-A-737765 discloses a vehicle mirror having a partially reflecting layer in front of a phosphorescent layer which can be illuminated from behind by a light source when the level of light from the headlights of a following vehicle is excessive. The light reradiated by the phosphorescent layer provides a luminous mat background which reduces the contrast between the bright image of the headlight and surrounding image area.

According to the invention, in a vehicle mirror of the type described above, the intermediate layer is a photochromic layer which normally has a high transmissivity of visible light but which becomes opaque to visible light when it is irradiated with ultraviolet light, the vehicle mirror including an ultraviolet light source positioned to eradiate such intermediate layer.

Two embodiments of the invention will now be described, by way of example, with reference to the accompanying drawings, in which:
Figure 1 is a cross-sectional view of a vehicle interior mirror in accordance with the invention, with the electric circuit for the ultraviolet light source shown schematically; and
Figure 2 is a cross-sectional view, similar to Figure 1, of another embodiment of the invention.

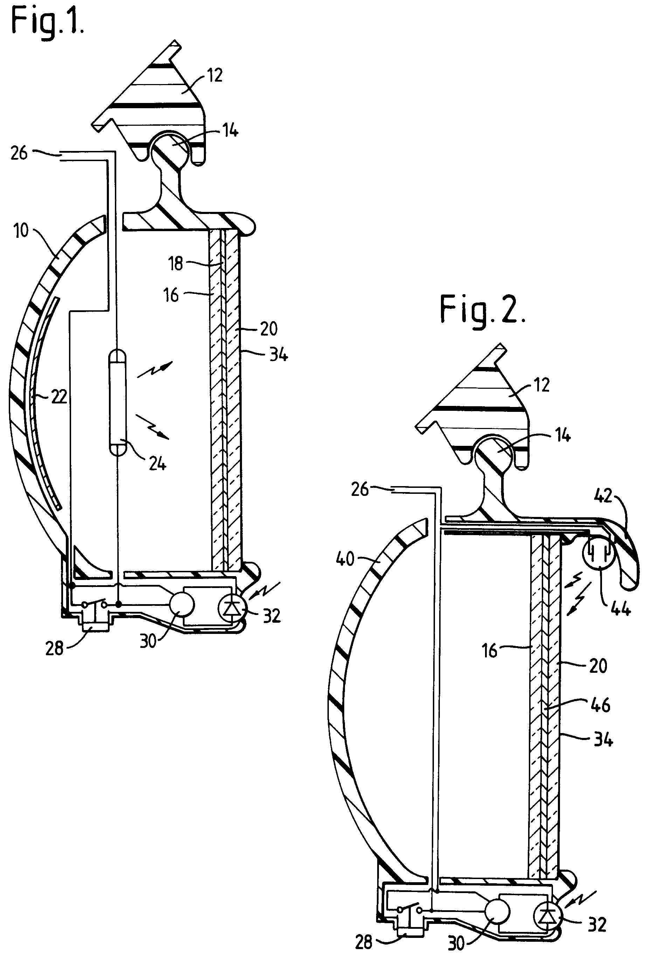

Figure 1 shows an interior mirror for a motor vehicle comprising a housing 10 mounted on a base 12 by means of a ball-and-socket joint 14. A glass substrate 16 is mounted within the housing 10, and carries a reflective layer 18 on its front surface. The thickness of the reflective layer 18 is less than 1 Å so as to be transparent to ultraviolet light. A layer of photochromic glass 20 is positioned in front of the reflective layer 18.

A concave reflector 22 is mounted inside the case 10, so as to direct ultraviolet light from a lamp 24 through the glass substrate 16 and the reflective layer 18 on to the photochromic layer 20. The lamp 24 is connected to power supply leads 26 both by a manually operable press button switch 28 on the bottom of the mirror housing 10, and by a power transistor 30 under the control of a photoelectric cell 32.

In use, the photochromic layer 20 is normally transparent. A relatively small percentage of light incident on the layer 20 (commonly about 15%) is reflected by its front surface 34 but most of the incident light is reflected by the layer 18 and the image reflected in this layer is seen by the user. If an electrical signal is applied to energise the ultraviolet light source 20, either by manual operation of the push button 28 or because the level of light detected by the photocell 32 exceeds a threshold value, the ultraviolet light from the source 24 incident on the photochromic layer 20 causes the latter to become opaque so that only the small percentage of the incident light reflected from the front surface of the photochromic layer 20 is perceived by the user.

Most of the components of the mirror shown in Figure 2 are the same as the corresponding components of the mirror shown in Figure 1 and are denoted by the same reference numerals. They will not be described again in detail. The differences are that the mirror housing 10 of Figure 1 is replaced by a housing 40 having a forwardly and downwardly hood 42 on its upper front edge, behind which an ultraviolet lamp 44 is mounted. The lamp 44 is connected to the power supply leads 26 via the controls 28, 30 and 32 as described with reference to Figure 1. When energised, ultraviolet light from the lamp 44 is incident on the front of the photochromic layer 20. Consequently the thin reflective layer 18 of Figure 1 can be replaced by a thicker reflective layer 46 since it does not have to transmit the ultraviolet light.

With both embodiments of the invention, the simple automatic control system (using the photocell 32) may be replaced by a more complex arrangement incorporating a second photocell arranged to detect the ambient light level so that the ultraviolet lamp is energised only if the difference between the light level sensed by the photocell 32 and the ambient light level exceeds a predetermined value.

## Claims

1. A rear view mirror for a motor vehicle, comprising a first reflective surface (34) having a low coefficient of reflectivity, a second reflective surface (18) behind the first reflective surface (34) and having a higher coefficient of reflectivity, an intermediate light transmitting layer between the first reflective surface (34) and the second reflective surface (18) and means for varying the transmissivity of the intermediate layer (20), characterised in that the intermediate layer is a photochromic layer (20) which normally has a high transmissivity of visible light but which becomes opaque to visible light when it is irradiated with ultraviolet light, and an ultraviolet light source (24, 44) is positioned to irradiate such intermediate layer (20).

2. A rear view mirror according to claim 1, wherein the second reflective surface (18) is transmissive of ultraviolet light and the ultraviolet light source (24) is positioned behind the second reflective surface (18).

3. A rear view mirror according to claim 1, wherein the ultraviolet light source (44) is positioned in front of the first reflective surface (34).

4. A rear view mirror according to claim 1, 2, or 3, wherein the ultraviolet light source (24, 44) is controlled by a manually operable switch (28).

5. A rear view mirror according to claim 1, 2 or 3, wherein the ultraviolet light source (24, 44) is controlled automatically in response to signals from a photoelectric cell (32).
